# EUROPÄISCHE PATENTSCHRIFT

(11) **EP 1 356 014 B1**
(45) Veröffentlichungstag und Bekanntmachung des Hinweises auf die Patenterteilung: **05.10.2011**
(21) Anmeldenummer: 02719749.0
(22) Anmeldetag: 01.02.2002
(51) Int. Cl.: C11D 1/72, C11D 1/825, C11D 1/83, C11D 1/66, C11D 1/722, C11D 1/75, C11D 1/22

(54) **HYDROXYMISCHETHER MIT HOHEM ETHOXYLIERUNGSGRAD ALS ENTSCHÄUMER**
HYDROXY MIXED ETHERS HAVING A HIGH DEGREE OF ETHOXYLATION AND USED AS ANTI-FOAMING AGENTS
HYDROXY-ETHERS MIXTES A HAUT DEGRE D'ETHOXYLATION UTILISES COMME AGENTS ANTIMOUSSANTS

(30) Priorität: 01.02.2001 DE 10104386; 13.03.2001 DE 10111838; 23.03.2001 DE 10114172; 30.03.2001 DE 10116020
(43) Veröffentlichungstag der Anmeldung: 29.10.2003
(73) Patentinhaber: Cognis IP Management GmbH, 40589 Düsseldorf (DE)
(72) Erfinder: SCHMID, Karl, Heinz, 40822 Mettmann (DE); STANISLOWSKI, Detlev, 40822 Mettmann (DE); RATHS, Hans-Christian, 40789 Monheim (DE)
(86) Internationale Anmeldenummer: PCT/EP2002/001052
(87) Internationale Veröffentlichungsnummer: WO 2002/061025

(56) Entgegenhaltungen:
- EP-A- 1 167 499
- WO-A-01/79401
- DE-A- 19 738 866

## Beschreibung

### Gebiet der Erfindung

Die Erfindung betrifft die Verwendung hoch-ethoxylierter Hydroxymischether als Entschäumer in Wasch-, Spül- und Reinigungsmitteln.

### Stand der Technik

Mittel für das Spülen und Reinigen harter, nichttextiler Oberflächen, die im Haushalt und Gewerbesektor vorkommen sollen meist bei Anwendung ein geringfügiges Schaumvolumen entwickeln, das sich innerhalb von wenigen Minuten signifikant weiter verringert. Mittel dieser Art sind seit langem bekannt und im Markt etabliert. Es handelt sich dabei im wesentlichen um wäßrige Tensidlösungen unterschiedlicher Art mit oder ohne Zusatz von Buildern, Lösungsvermittlern (Hydrotropen) oder Lösungsmitteln. Zum Nachweis der Wirksamkeit bei Beginn der Reinigungsarbeit wird vom Verbraucher zwar ein gewisses Schäumen der Anwendungslösung gewünscht, der Schaum soll jedoch rasch zusammenfallen, damit einmal gereinigte Flächen nicht nachgewischt werden müssen. Zu diesem Zweck werden Mittel der genannten Art üblicherweise mit schwach schäumenden nichtionischen Tensiden versetzt.
Besonders an maschinell gespültes Geschirr werden heute höhere Anforderungen gestellt als an manuell gespültes Geschirr. So wird auch ein von Speiseresten völlig gereinigtes Geschirr dann als nicht einwandfrei bewertet, wenn es nach dem maschinellen Geschirrspülen noch weißliche, auf Wasserhärte oder anderen mineralischen Salzen beruhende Flecken aufweist, die mangels Netzmittel aus eingetrockneten Wassertropfen stammen.
Um glanzklares und fleckenloses Geschirr zu erhalten, setzt man daher Klarspüler ein. Der Zusatz von flüssigem oder festem Klarspüler, der separat zugegeben werden kann, oder bereits in gebrauchsfertiger Darreichungsform mit dem Reinigungsmittel und/oder Regeneriersalz zusammen ("2 in 1", "3 in 1", z.B. in Form von Tabs und Pulvern) vorliegt, sorgt dafür, dass das Wasser möglichst vollständig vom Spülgut abläuft, sodass die unterschiedlichen Oberflächen am Ende des Spülprogramms rückstandsfrei und glänzend sind.
Marktübliche Klarspülmittel stellen Gemische z.B. aus nichtionischen Tensiden, Lösungsvermittlern, organischen Säuren und Lösungsmitteln, Wasser sowie ggf. Konservierungsmittel und Duftstoffe dar
Die Aufgabe der Tenside in diesen Mitteln besteht darin, die Grenzflächenspannung des Wassers so zu beeinflussen, dass es in einem möglichst dünnen, zusammenhängenden Film vom Spülgut ablaufen kann, so dass beim anschließenden Trocknungsvorgang keine Wassertropfen, Streifen oder Filme zurückbleiben (sogenannte Netzwirkung bzw. Netzverhalten).
Deswegen müssen Tenside in Klarspülern auch den durch Speisereste auftretenden Schaum in der Geschirrspülmaschine dämpfen. Da die Klarspüler meist Säuren für eine Verbesserung des Klartrockeneffekts enthalten, müssen die eingesetzten Tenside zusätzlich relativ hydrolyseunempfindlich gegenüber Säuren sein.
Klarspüler werden sowohl im Haushalt als auch im gewerblichen Bereichen eingesetzt. In Haushaltsgeschirrspülern wird der Klarspüler meist nach dem Vorspül- und Reinigungsgang bei knapp 40°C-65°C zudosiert. Die gewerblichen Geschirrspülmaschinen arbeiten mit nur einer Reinigungsflotte, die lediglich durch Zugabe der Klarspüllösung aus dem vorhergehenden Spülvorgang erneuert wird. Es findet also während des gesamten Spülprogrammes kein vollständiger Wasseraustausch statt. Daher muß der Klarspüler auch schaumdämpfend wirken, temperaturstabil sein bei einem starken Temperaturgefälle von maximal 85-35°C und außerdem ausreichend stabil gegen Alkali und Aktivchlor sein.

In der deutschen Offenlegungschrift DE 19738866 werden Tensidmischungen aus Hydroxymischethern und nichtionischen Tensiden, wie Feftalkoholpolyethylenglycol/polypropylenglycolether, gegebenenfalls endgruppenverschlossen, beschrieben, die ein sehr gutes Schaumverhalten aufweisen und in Klarspülmitteln hervorragende Klarspüleffekte zeigen.
Aus der deutschen Offenlegungsschrift **DT 2432757** ist bekannt, das Hydroxymischether als Schaumdämpfungsmittel in Wasch-, Spül- und Reinigungsmittel eingesetzt werden.

**Aufgabe** der vorliegenden Erfindung war Wasch-, Spül- und Reinigungsmittel bereitzustellen, die gleichzeitig **ein gutes Schaum- und Reinigungsverhalten,** insbesondere ein sehr gutes Ablaufverhalten, d.h. eine Verbesserung des Netzverhaltens an Kunststoffoberflächen sowie eine hohe Materialverträglichkeit, insbesondere mit Kunststoffen, zeigen. Außerdem sollten sich vereinfacht feste Reiniger-Formulierungen herstellen lassen.
Die **Aufgabe wurde gelöst,** indem ausgewählte Tenside vom Typ Hydroxymischether eingesetzt werden.

### Beschreibung der Erfindung

Verwendung von Hydroxymischethern gemäß Formel (I)

**R¹O[CH₂CH₂O]ₓCH₂CH(OH)R**² **(I)**

in der R¹ für einen linearen oder verzweigten Alkyl- und/oder Alkenylrest mit 4 bis 22 Kohlenstoffatomen R² für einen linearen oder verzweigten Alkyl- und/oder Alkenylrest mit 2 bis 22 Kohlenstoffatomen x für 40 bis 80 steht, als Entschäumer in Wasch-, Spül- und Reinigungsmitteln, insbesondere in maschinellen Geschirr-Reinigern und/oder Klarspülern

### Hydroxymischether

Hydroxymischether sind literaturbekannt und werden beispielsweise in der deutschen Anmeldung DE 19738866 beschrieben.
Sie werden hergestellt durch Umsetzung von 1,2-Epoxyalkanen (R²CHOCH₂), wobei R² für einen Alkyl- und/oder Alkenylrest mit 2 bis 22, insbesondere 6 bis 16 Kohlenstoffatomen steht, mit alkoxylierten Alkoholen.
Bevorzugt im Sinne der Erfindung werden solche Hydroxymischether, die sich von Alkoxylaten von einwertigen Alkoholen der Formel R¹-OH mit 4 bis 18 Kohlenstoffatomen ableiten, wobei R¹ für einen aliphatischen, gesättigten, geradkettigen oder verzweigten Alkylrest, insbesondere mit 6 bis 16 Kohlenstoffatomen, steht.
Beispiele für geeignete geradkettige Alkohole sind Butanol-1, Capron-, Önanth-, Capryl-, Pelargon, Caprinalkohol, Undecanol-1, Laurylalkohol, Tridecanol-1, Myristylalkohol, Pentadecanol-1, Palmitylakohol, Heptadecanol-1, Stearylalkohol, Nonadecanol-1, Arachidylalkohol, Heneicosanol-1, Behenylalkohol sowie deren technische Mischungen, wie sie bei der Hochdruckhydrierung von technischen Methylestern auf Basis von Fetten und Ölen anfallen. Beispiele für verzweigte Alkohole sind sogenannte Oxoalkohole, die meist 2 bis 4 Methylgruppen als Verzweigungen tragen und nach dem Oxoprozeß hergestellt werden und sogenannte Guerbetalkohole, die in 2-Stellung mit einer Alkylgruppe verzweigt sind. Geeignete Guerbetalkohole sind 2-Ethylhexanol, 2-Butyloctanol, 2-Hexyldecanol und/oder 2-Octyldodecanol.

Die Alkohole werden in Form ihrer Alkoxylate eingesetzt, die durch Umsetzung der Alkohole in mit Ethylenoxid auf bekannte Weise hergestellt werden.
Vorzugsweise werden Alkoxylate von Alkoholen, die durch Umsetzung mit 40 bis 80 Mol Ethylenoxid entstehen eingesetzt.
Insbesondere bevorzugt sind Hydroxymischether mit 40 bis 60 Ethylenoxideinheiten.

**Bevorzugt im Sinne der Erfindung** verwendet werden solche Hydroxymischether, die sich von Ethoxylaten von einwertigen Alkoholen der Formel R¹-OH mit 6 bis 18 Kohlenstoffatomen, vorzugsweise 6 bis 16 und insbesondere 8 bis 10 Kohlenstoffatomen ableiten, wobei R¹ für einen linearen Alkylrest steht und x für 40 bis 60.

**Ganz besonders bevorzugt** ist die Verwendung von Hydroxymischethern der Formel (I), wobei R1 für einen Alkylrest mit 8 bis 10 Kohlenstoffatomen, insbesondere auf Basis eines nativen Fettalkohols, R2 für einen Alkylrest mit 10 Kohlenstoffatome, insbesondere für einen linearen Alkylrest und x für 40 bis 60 steht.

### Alkyl- und/oder Alkenyloligoglykoside

In einer weiteren Ausführungsform enthalten die erfindungsgemäßen Mittel Alkyl- und/oder Alkenyloligoglykoside der Formel (II).

**R⁵O-[G]ₚ** **(II),**

wobei R⁵ für einen Alkyl- und/oder Alkenylrest mit 4 bis 22 Kohlenstoffatomen, G für einen Zuckerrest mit 5 oder 6 Kohlenstoffatomen und p für Zahlen von 1 bis 10 steht, enthalten sind.

Sie können nach den einschlägigen Verfahren der präparativen organischen Chemie erhalten werden. Stellvertretend für das umfangreiche Schrifttum sei hier auf die Übersichtsarbeit von Biermann et al. in
Starch/Stärke 45, 281 (1993**),** B.Salka in Cosm.Toil. 108, 89 (1993**)** sowie J.Kahre et al. in SÖFW-Journal Heft 8, 598 (1995**)** verwiesen.
Die Alkyl- und/oder Alkenyloligoglykoside können sich von Aldosen bzw. Ketosen mit 5 oder 6 Kohlenstoffatomen, vorzugsweise der Glucose ableiten. Die bevorzugten Alkyl- und/oder Alkenyloligoglykoside sind somit Alkyl- und/oder Alkenyloligo**glucoside.**
Der **Alkylrest** R⁵ kann sich von primären **gesättigten Alkoholen** ableiten. Typische Beispiele sind Butanol-1, Capron-, Önanth-, Capryl-, Pelargon-, Caprinalkohol, Undecanol-1, Laurylalkohol, Tridecanol-1, Myristylalkohol, Pentadecanol-1, **Cetylalkohol,** Palmitylakohol, Heptadecanol-1, Stearylalkohol, Isostearylalkohol, Nonadecanol-1, Arachidylalkohol, Heneicosanol-1, und Behenylalkohol sowie deren technische Mischungen, wie sie beispielsweise bei der Hydrierung von technischen Fettsäuremethylestern oder im Verlauf der Hydrierung von Aldehyden aus der Roelen'schen Oxosynthese erhalten werden.
Der **Alkenylrest** R⁵ kann sich von primären **ungesättigten Alkoholen** ableiten. Typische Beispiele **ungesättigter Alkohole** sind Undecen-1-ol, Oleylalkohol, Elaidylalkohol, Ricinolalkohol, Linoleylalkohol, Linolenylalkohol, Gadoleylalkohol, Arachidonalkohol, Erucaalkohol, Brassidylalkohol, Palmoleylalkohol, Petroselinylalkohol, Arachylalkohol, sowie deren technische Gemische, die wie oben beschrieben erhalten werden können.

**Bevorzugt** werden Alkyl- bzw. Alkenylrest R⁵, die sich von primären Alkoholen mit 6 bis 16 Kohlenstoffatomen ableiten.
Insbesondere **geeignet** sind Alkyloligoglucoside der Kettenlänge C₈-C₁₀, die als Vorlauf bei der destillativen Auftrennung von technischem C₈-C₁₈-Kokosfettalkohol anfallen und mit einem Anteil von weniger als 6 Gew.-% C₁₂-Alkohol verunreinigt sein können sowie Alkyloligoglucoside auf Basis technischer C_{9/11}-Oxoalkohole.
Der Alkyl- bzw. Alkenylrest R⁵ kann sich ferner auch von primären Alkoholen mit 12 bis 14 Kohlenstoffatomen ableiten.

Die Indexzahl p in der allgemeinen Formel **(II)** gibt den Oligomerisierungsgrad (DP), d.h. die Verteilung von Mono- und Oligoglykosiden an und steht für eine Zahl zwischen 1 und 10. Während p in einer gegebenen Verbindung stets ganzzahlig sein muß und hier **insbesondere** die Werte p = 1 bis 3 annehmen kann, ist der Wert p für ein bestimmtes Alkyloligoglykosid eine analytisch ermittelte rechnerische Größe, die meistens eine gebrochene Zahl darstellt.

**Vorzugsweise** werden Alkyl- und/oder Alkenyloligoglykoside mit einem mittleren Oligomerisierungsgrad p von 1,1 bis 2,0 eingesetzt. Aus anwendungstechnischer Sicht sind solche Alkyl- und/oder Alkenyloligoglykoside **bevorzugt,** deren Oligomerisierungsgrad kleiner als 2,0 ist und insbesondere zwischen 1,2 und 1,7 liegt.

Bevorzugt werden Alkyl- und/oder Alkenyloligoglycoside der Formel (II) eingesetzt, wobei p für Zahlen von 1 bis 3 und R⁵ für einen Alkylrest mit 6 bis 16 Kohlenstoffatomen steht.

**In einer bevorzugten Ausführungsform** enthalten die erfindungsgemäßen Mittel 0,01 bis 25 Gew.%, vorzugsweise 0,025 bis 20 Gew.% und insbesondere 0,1 bis 15 Gew.% Hydroxymischether der Formel (I) berechnet als Aktivsubstanz, bezogen auf die Mittel.
**Aktivsubstanz** definiert sich als die Masse an Tensiden (gerechnet als Reinstoff zu 100%), die in dem Mittel enthalten sind.

**In einer weiteren Ausführungsform** enthalten die erfindungsgemäßen Mittel 0,01 bis 30 Gew.%, vorzugsweise 0,1 bis 20 Gew.% und insbesondere 0,2 bis 15 Gew.% Alkyl- und/oder Alkenyloligoglykoside der Formel (II) berechnet als Aktivsubstanz, bezogen auf die Mittel.

### Nichtionische Tenside

Die erfindugsgemäßen Mittel können weitere nichtionische Tenside enthalten. Typische Beispiele für **nichtionische Tenside** sind Alkoxylate von Alkanolen, endgruppenverschlossene Alkoxylate von Alkanolen ohne freie OH-Gruppen , alkoxylierte Fettsäureniedrigalkylester, Aminoxide, Alkylphenolpolyglycolether, Fettsäurepolyglycolester, Fettsäureamidpolyglycolether, Fettaminpolyglycolether, alkoxylierte Triglyceride, Mischether bzw. Mischformale, Fettsäure-N-alkylglucamide, Proteinhydrolysate (insbesondere pflanzliche Produkte auf Weizenbasis), Polyolfettsäureester, Zuckerester, Sorbitanester, und Polysorbate. Sofern die nichtionischen Tenside Polyglycoletherketten enthalten, können diese eine konventionelle, vorzugsweise jedoch eine eingeengte Homologenverteilung aufweisen.
Bevorzugt sind die weiteren nichtionische Tenside ausgewählt aus der Gruppe, die gebildet wird von **Alkoxylaten von Alkanolen,** insbesondere Fettalkoholpolyethylenglykol/polypropylenglykolether (FAEO/PO) der Formel (III) bzw. Fettalkoholpolypropylenglykol/polyethylenglykolether (FAPO/EO) der Formel (IV), **endgruppenverschlossene Alkoxylate von Alkanole,** insbesondere endgruppenverschlossene Fettalkoholpolyethylenglykol/polypropylenglykolether bzw. endgruppenverschlossene Fettalkoholpolypropylenglykol/polyethylenglykolether, und **Fettsäureniedrigalkylester und Aminoxiden.**

### Fettalkoholpolyethylenglykol/polypropylenglykolether

In einer bevorzugten Ausführungsform werden Fettalkoholpoly**ethylenglykol**/poly**propylenglykol**ether der Formel (III), die gegebenenfalls endgruppenverschlossen sind,

R⁶O(CH₂CH₂O)ₙ[CH₂(CH₃)CHO]ₘR⁷ (III)

eingesetzt, in der R⁶ für einen Alkyl- und/oder Alkenylrest mit 8 bis 22 C-Atomen, R⁷ für H oder einen Alkylrest mit 1 bis 8 C-Atomen, n für eine Zahl von 1 bis 40, **vorzugsweise** 1 bis 30, **insbesondere 1** bis 15, und m für 0 oder eine Zahl von 1 bis 10 steht.

### Fettalkoholpolypropylenglykol/polyethylenglykolether

Ebenso geeignet sind Fettalkoholpoly**propylehglykol**/poly**ethylenglykol**ether der Formel (IV), die gegebenenfalls endgruppenverschlossen sind,

R⁸O[CH₂(CH₃)CHO]_{q}(CH₂CH₂O)ᵣR⁹ (IV)

in der R⁸ für einen Alkyl- und/oder Alkenylrest mit 8 bis 22 C-Atomen, R⁹ für H oder einen Alkylrest mit 1 bis 8 C-Atomen, q für eine Zahl von 1 bis 5 und r für eine Zahl von 0 bis 15 steht.

**Einer bevorzugten Ausführungsform** entsprechend enthalten die erfindungsgemäßen Mittel Fettalkoholpolyethylenglykollpolypropylenglykolether der Formel (III), in der R⁶ für einen aliphatischen, gesättigten, geradkettigen oder verzweigten Alkylrest mit 8 bis 16 C-Atomen, n für eine Zahl von 1 bis 10, und m für 0 und R⁷ für Wasserstoff steht. Es handelt sich hierbei um Anlagerungsprodukte von 1 bis 10 Mol Ethylenoxid an monofunktionelle Alkohole. Als Alkohole sind die oben beschriebenen Alkohole wie Fettalkohole, Oxoalkohole und Guerbetalkohole geeignet.
**Auch geeignet** sind von solchen Alkoholethoxylaten solche, die eine eingeengte Homologenverteilung aufweisen.

**Weitere geeignete** Vertreter von nichtendgruppenverschlossenen Vertretern sind solche der Formel (III), in der R⁶ für einen aliphatischen, gesättigten, geradkettigen oder verzweigten Alkylrest mit 8 bis 16 C-Atomen, n für eine Zahl von 2 bis 7, m für eine Zahl von 3 bis 7 und R⁷ für Wasserstoff steht. Es handelt sich hierbei um Anlagerungsprodukte von zunächst mit 2 bis 7 Mol Ethylenoxid und dann mit 3 bis 7 Mol Propylenoxid alkoxylierten monofunktionellen Alkohole der schon beschriebenen Art.

Die endgruppenverschlossenen Verbindungen der Formel (III) sind mit einer Alkylgruppe mit 1 bis 8 C-Atomen verschlossen (R⁷). Häufig werden derartige Verbindungen in der Literatur auch als Mischether bezeichnet. Geeignete Vertreter sind Methylgruppenverschlossene Verbindungen der Formel (III), in denen R⁶ für einen aliphatischen, gesättigten, geradkettigen oder verzweigten Alkylrest mit 8 bis 16 C-Atomen, n für eine Zahl von 2 bis 7, m für eine Zahl von 3 bis 7 und R⁷ für eine Methylgruppe steht. Derartige Verbindungen können leicht durch Umsetzung der entsprechenden nicht endgruppenverschlossenen Fettalkoholpolyethylenglykol/polypropylenglykolether mit Methylchlorid in Gegenwart einer Base hergestellt werden.

Geeignete Vertreter von Alkylgruppenverschlossenen Verbindungen sind solche der Formel (III), in denen R⁶ für einen aliphatischen, gesättigten, geradkettigen oder verzweigten Alkylrest mit 8 bis 16 C-Atomen, n für eine Zahl von 5 bis 15, m für 0 und R⁷ für eine Alkylgruppe mit 4 bis 8 C-Atomen steht. Bevorzugt wird der Endgruppenverschluß mit einer geradkettigen oder verzweigten Butylgruppe durchgeführt, indem der entsprechende Fettalkoholpolyethylenglykolether mit n-Butylchlorid oder mit tert. Butylchlorid in Gegenwart von Basen umgesetzt wird.

Anstelle der Verbindungen der Formel (III) oder in Mischung mit ihnen können gegebenenfalls endgruppenverschlossene Fettalkoholpolypropylenglykol/polyethylenglykolether der Formel (IV) enthalten sein. Derartige Verbindungen werden beispielsweise in der deutschen Offenlegungsschrift DE-A1- 43 23 252 beschrieben. Besonders bevorzugte Vertreter der Verbindungen der Formel (IV) sind solche, in denen R⁸ für einen aliphatischen, gesättigten, geradkettigen oder verzweigten Alkylrest mit 8 bis 16 C-Atomen, q für eine Zahl von 1 bis 5, r für eine Zahl von 1 bis 6 und R⁹ für Wasserstoff steht. Es handelt sich hierbei vorzugsweise um Anlagerungsprodukte von 1 bis 5 Mol Propylenoxid und von 1 bis 6 Mol Ethylenoxid an monofunktionelle Alkohole, die bereits im Zusammenhang mit den Hydroxymischethern als geeignet beschrieben worden sind.

### Alkoxylierte Fettsäureniedrigalkylester

Als alkoxylierte **Fettsäureniedrigalkylester** kommen Tenside der Formel (V) in Betracht,

R¹⁰CO-(OCH₂CHR¹¹)_{w}OR¹² (V)

in der R¹⁰CO für einen linearen oder verzweigten, gesättigten und/oder ungesättigten Acylrest mit 6 bis 22 Kohlenstoffatomen, R¹¹ für Wasserstoff oder Methyl, R¹² für lineare oder verzweigte Alkylreste mit 1 bis 4 Kohlenstoffatomen und w für Zahlen von 1 bis 20 steht. Typische Beispiele sind die formalen Einschubprodukte von durchschnittlich 1 bis 20 und vorzugsweise 5 bis 10 Mol Ethylen- und/oder Propylenoxid in die Methyl-, Ethyl-, Propyl-, Isopropyl-, Butyl- und tert.-Butylester von Capronsäure, Caprylsäure, 2-Ethylhexansäure, Caprinsäure, Laurinsäure, Isotridecansäure, Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und Erucasäure sowie deren technische Mischungen. Üblicherweise erfolgt die Herstellung der Produkte durch Insertion der Alkylenoxide in die Carbonylesterbindung in Gegenwart spezieller Katalysatoren, wie z.B. calcinierter Hydrotalcit. Besonders bevorzugt sind Umsetzungsprodukte von durchschnittlich 5 bis 10 Mol Ethylenoxid in die Esterbindung von technischen Kokosfettsäuremethylestern.

### Aminoxide

Als Aminoxide können Verbindungen der Formel (VI) und/oder eingesetzt werden.

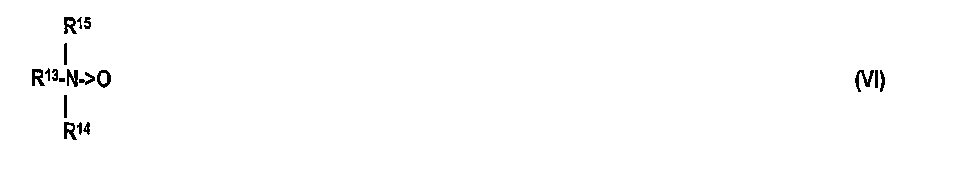

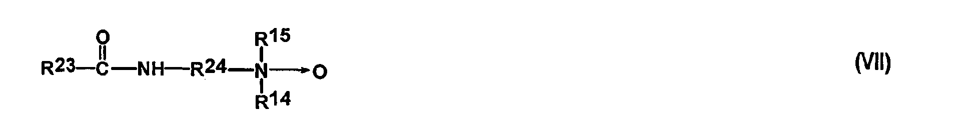

Bei der Herstellung der Aminoxide der Formel (VI) geht man von tertiären Fettaminen aus, die mindestens einen langen Alkylrest aufweisen, und oxidiert sie in Gegenwart von Wasserstoffperoxid. Bei den im Sinne der Erfindung in Betracht kommenden Aminoxiden der Formel (VI), steht R¹³ für einen linearen oder verzweigten Alkylrest mit 6 bis 22, vorzugsweise 12 bis 18 Kohlenstoffatomen, sowie R¹⁴ und R¹⁵ unabhängig voneinander für R¹³ oder einen gegebenenfalls hydroxysubstituierten Alkylrest mit 1 bis 4 Kohlenstoffatomen. Vorzugsweise werden Aminoxide der Formel **(VI)** eingesetzt, in der R¹³ und R¹⁴ für C_{12/14}- bzw. C_{12/18}-Kokosalkylreste stehen und R¹⁵ einen Methyl- oder einen Hydroxyethylrest bedeutet. Ebenfalls bevorzugt sind Aminoxide der Formel **(VI),** in denen R¹³ für einen C_{12/14}- bzw. C_{12/18}-Kokosalkylrest steht und R¹⁴ und R¹⁵ die Bedeutung eines Methyl- oder Hydroxyethylrestes haben. Weitere geeignete Aminoxide sind **Alkylamido**-aminoxide der Formel **(VII),** wobei der Alkylamido-Rest R²³CONH durch die Reaktion von linearen oder verzweigten Carbonsäuren, vorzugsweise mit 6 bis 22, bevorzugt mit 12 bis 18 Kohlenstoffatomen, insbesondere aus 6_{12/14}- bzw. C_{12/18}- Fettsäuren mit Aminen entsteht. Dabei stellt R²⁴ eine linerare oder verzweigte Alkylengruppe dar mit 2 bis 6, vorzugsweise 2 bis 4 Kohlenstoffatomen und R¹⁴ und R¹⁵ haben die in Formel **(VI)** angegebene Bedeutung.

Die **weiteren nichtionische Tenside** können in den erfindungsgemäßen Mitteln in Mengen von 0,1 bis 15 Gew.%, vorzugsweise 0,5 bis 10 Gew.%, insbesondere 1 bis 8 Gew.% enthalten sein, berechnet als Aktivsubstanz, bezogen auf die Mittel.

Gemäß der vorliegenden Erfindung können die erfindungsgemäßen Mittel **anionische Tenside** enthalten.

### Anionische Tenside

Typische Beispiele für **anionische** Tenside sind Seifen, Alkylbenzolsulfonate, sekundäre Alkansulfonate, Olefinsulfonate, Alkylethersulfonate, Glycerinethersulfonate, α-Methylestersulfonate, Sulfofettsäuren, **Alkyl- und/oder Alkenylsulfate, Alkylethersulfate,** Glycerinethersulfate, Hydroxymischethersulfate, **Monoglycerid(ether)sulfate,** Fettsäureamid(ether)sulfate, Mono- und Dialkylsulfosuccinate, Mono- und Dialkylsulfosuccinamate, Sulfotriglyceride, Amidseifen, Ethercarbonsäuren und deren Salze, Fettsäureisethionate, Fettsäuresarcosinate, Fettsäuretauride, N-Acylaminosäuren wie beispielsweise Acyllactylate, Acyltartrate, Acylglutamate und Acylaspartate, Alkyloligoglucosidsulfate, Proteinfettsäurekondensate (insbesondere pflanzliche Produkte auf Weizenbasis) und Alkyl(ether)phosphate. Sofern die anionischen Tenside Polyglycoletherketten enthalten, können diese eine konventionelle, vorzugsweise jedoch eine eingeengte Homologenverteilung aufweisen.

**Vorzugsweise** sind die **anionischen Tenside** ausgewählt aus der Gruppe, die gebildet wird von Alkyl- und/oder Alkenylsulfate, Alkylethersulfate, Alkylbenzolsulfonate, Monoglycerid(ether)sulfate und Alkansulfonate, insbesondere Fettalkoholsulfate, Fettalkoholethersulfate, sekundäre Alkansulfonate und lineare Alkylbenzolsulfonate.

### Alkyl- und/oder Alkenylsulfate

Unter Alkyl- und/oder Alkenylsulfaten, die auch häufig als Fettalkoholsulfate bezeichnet werden, sind die Sulfatierungsprodukte primärer Alkohole zu verstehen, die der Formel **(VIII)** folgen,

**R¹⁶O-SO₃X** **(VIII)**

in der R¹⁶ für einen linearen oder verzweigten, aliphatischen Alkyl- und/oder Alkenylrest mit 6 bis 22, vorzugsweise 12 bis 18 Kohlenstoffatomen und X für ein Alkali- und/oder Erdalkalimetall, Ammonium, Alkylammonium, Alkanolammonium oder Glucammonium steht.
Typische Beispiele für Alkylsulfate, die im Sinne der Erfindung Anwendung finden können, sind die Sulfatierungsprodukte von Capronalkohol, Caprylalkohol, Caprinalkohol, 2-Ethylhexylalkohol, Laurylalkohol, Myristylalkohol, Cetylalkohol, Palmoleylalkohol, Stearylalkohol, Isostearylalkohol, Oleylalkohol, Elaidylalkohol, Petroselinylalkohol, Arachylalkohol, Gadoleylalkohol, Behenylalkohol und Erucylalkohol sowie deren technischen Gemischen, die durch Hochdruckhydrierung technischer Methylesterfraktionen oder Aldehyden aus der Roelenschen Oxosynthese erhalten werden. Die Sulfatierungsprodukte können vorzugsweise in Form ihrer Alkalisalze und insbesondere ihrer Natriumsalze eingesetzt werden. Besonders bevorzugt sind Alkylsulfate auf Basis von C_{16/18}-Talgfettalkoholen bzw. pflanzliche Fettalkohole vergleichbarer C-Kettenverteilung in Form ihrer Natriumsalze.

### Alkylethersulfate

Alkylethersulfate ("Ethersulfate") stellen bekannte anionische Tenside dar, die großtechnisch durch SO₃- oder Chlorsulfonsäure (CSA)-Sulfatierung von Fettalkohol- oder Oxoalkoholpolyglycolethern und nachfolgende Neutralisation hergestellt werden. Im Sinne der Erfindung kommen Ethersulfate in Betracht, die der Formel (IX) folgen,

**R¹⁷O-(CH₂CH₂O)ₐSO₃X** **(IX)**

in der R¹⁷ für einen linearen oder verzweigten Alkyl- und/oder Alkenylrest mit 6 bis 22 Kohlenstoffatomen, a für Zahlen von 1 bis 10 und X für ein Alkali- und/oder Erdalkalimetall, Ammonium, Alkylammonium, Alkanolammonium oder Glucammonium steht. Typische Beispiele sind die Sulfate von Anlagerungsprodukten von durchschnittlich 1 bis 10 und insbesondere 2 bis 5 Mol Ethylenoxid an Capronalkohol, Caprylalkohol, 2Ethylhexylalkohol, Caprinalkohol, Laurylalkohol, Isotridecylalkohol, Myristylalkohol, Cetylalkohol, Palmoleylalkohol, Stearylalkohol, Isostearylalkohol, Oleylalkohol, Elaidylalkohol, Petroselinylalkohol, Arachylalkohol, Gadoleylalkohol, Behenylalkohol, Erucylalkohol und Brassidylalkohol sowie deren technische Mischungen in Form ihrer Natrium- und/oder Magnesiumsalze. Die Ethersulfate können dabei sowohl eine konventionelle als auch eine eingeengte Homologenverteilung aufweisen. Besonders bevorzugt ist der Einsatz von Ethersulfaten auf Basis von Addukten von durchschnittlich 2 bis 3 Mol Ethylenoxid an technische C_{12/14}- bzw. C_{12/18}- Kokosfettalkoholfraktionen in Form ihrer Natrium- und/oder Magnesiumsalze.

### Alkylbenzolsulfonate

Alkylbenzolsulfonate folgen vorzugsweise der Formel **(X),**

**R¹⁸-Ph-SO₃X** **(X)**

in der R¹⁸ für einen verzweigten, vorzugsweise jedoch linearen Alkylrest mit 10 bis 18 Kohlenstoffatomen, Ph für einen Phenylrest und X für ein Alkali- und/oder Erdalkalimetall, Ammonium, Alkylammonium, Alkanolammonium oder Glucammonium steht. Vorzugsweise werden Dodecylbenzolsulfonate, Tetradecylbenzolsulfonate, Hexadecylbenzolsulfonate sowie deren technische Gemische in Form der Natriumsalze eingesetzt.

### Monoglycerid(ether)sulfate

Monoglyceridsulfate und Monoglyceridethersulfate stellen bekannte anionische Tenside dar, die nach den einschlägigen Methoden der präparativen organischen Chemie erhalten werden können. Üblicherweise geht man zu ihrer Herstellung von Triglyceriden aus, die gegebenenfalls nach Ethoxylierung zu den Monoglyceriden umgeestert und nachfolgend sulfatiert und neutralisiert werden. Gleichfalls ist es möglich, die Partialglyceride mit geeigneten Sulfatierungsmitteln, vorzugsweise gasförmiges Schwefeltrioxid oder Chlorsulfonsäure umzusetzen [vgl. EP 0561825 B1**,** EP 0561999 B1 (Henkel)]. Die neutralisierten Stoffe können - falls gewünscht - einer Ultrafiltration unterworfen werden, um den Elektrolytgehalt auf ein gewünschtes Maß zu vermindern **[**DE 4204700 A1 (Henkel)]. Übersichten zur Chemie der Monoglyceridsulfate sind beispielsweise von A. K. Biswas et al. in J.Am.Oil.Chem.Soc. 37, 171 (1960**)** und F. U. Ahmed J.Am.Oil.Chem.Soc. 67, 8 (1990**)** erschienen. Die im Sinne der Erfindung einzusetzenden **Monoglycerid(ether)sulfate** folgen der Formel **(XI),** 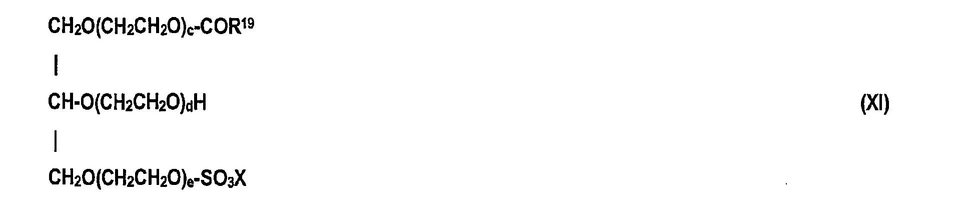 in der R¹⁹CO für einen linearen oder verzweigten Acylrest mit 6 bis 22 Kohlenstoffatomen, c, d und e in Summe für 0 oder für Zahlen von 1 bis 30, vorzugsweise 2 bis 10, und X für ein Alkali- oder Erdalkalimetall steht. Typische Beispiele für im Sinne der Erfindung geeignete Monoglycerid(ether)sulfate sind die Umsetzungsprodukte von Laurinsäuremonoglycerid, Kokosfettsäuremonoglycerid, Palmitinsäuremonoglycerid, Stearinsäuremonoglycerid, Ölsäuremonoglycerid und Talgfettsäuremonoglycerid sowie deren Ethylenoxidaddukte mit Schwefeltrioxid oder Chlorsulfonsäure in Form ihrer Natriumsalze. Vorzugsweise werden Monoglyceridsulfate der Formel **(**XI) eingesetzt, in der R¹⁹CO für einen linearen Acylrest mit 8 bis 18 Kohlenstoffatomen steht.

### Alkansulfonate

Unter Alkansulfonate versteht man Verbindungen der Formel (XII). 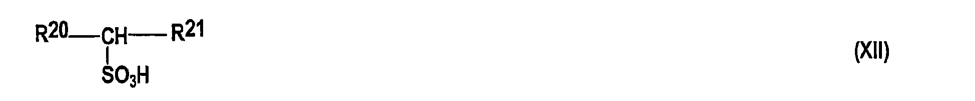 R²⁰ und R²¹ stehen für Alkylreste, wobei R²⁰ und R²¹ zusammen nicht mehr als 50 Kohlenstoffatome haben sollen.

**Zweckmäßigerweise** können die Mittel 0,1 bis 20 Gew.%, vorzugsweise 0,25 bis 15 Gew.%, insbesondere 0,4 bis 10 Gew.% **anionische Tenside** enthalten, berechnet als Aktivsubstanz, bezogen auf die Mittel. Den zu 100 Gew.% fehlenden Rest können Hilfs- und Zusatzstoffe sowie Wasser darstellen.

Die erfindungsgemäßen Mittel können als **übliche Inhaltstsstoffe** bzw. Hilfs- und Zusatzstoffe beispielsweise **Lösungsvermittler** wie Cumolsulfonat, Ethanol, Isopropylalkohol, Ethylenglycol, Propylenglycol, Butylglycol, Diethylenglycol, Propylenglycolmonobutylether, Polyethylen- bzw. polypropylenglycolether mit Molmassen von 600 bis 1 500 000, vorzugsweise mit einer Molmasse von 400 000 bis 800 000, oder insbesondere Butyldiglycol enthalten. Weiterhin können **Abrasivstoffe,** wie Quarz- bzw. Holzmehl oder Polyethylenreibkörper enthalten sein.
In vielen Fällen ist eine zusätzliche bakterizide Wirkung erwünscht, weswegen die Mittel kationische Tenside oder Biozide, beispielsweise Glucoprotamin, enthalten können.
Geeignete **Builder** sind Zeolithe, Schichtsilicate, Phosphate sowie Ethylendiamintetraessigsäure, Nitrilotriessigsäure, Citronensäure und deren Salz, sowie anorganische Phosphonsäuren.
Unter den als Peroxy-**Bleichmittel** dienenden Verbindungen haben das Natriumperborat-Tetrahydrat und das Natriumperborat-Monohydrat eine besondere Bedeutung. Weitere Bleichmittel sind beispielsweise Peroxycarbonat, Citratperhydrate sowie H₂O₂-liefernde persaure Salze der Persäuren wie Perbenzoate, Peroxyphthalate oder Diperoxydodecandisäure. Sie werden üblicherweise in Mengen von 0,1 bis 40 Gew.-% eingesetzt. Bevorzugt ist der Einsatz von Natriumperborat-Monohydrat in Mengen von 10 bis 20 Gew.-% und insbesondere von 10 bis 15 Gew.-%.

Als **Enzyme** kommen solche aus der Klasse der Proteasen, Lipase, Amylasen, Cellulasen bzw. deren Gemische in Frage. Besonders gut geeignet sind aus Bakterienstämmen oder Pilzen, wie Bacillus subtilis, Bacillus lichenformis und Strptomyces griseus gewonnene enzymatische Wirkstoffe. Vorzugsweise werden Proteasen vom Subtilisin-Typ und insbesondere Proteasen, die aus Bacillus lentes gewonnen werden, eingesetzt. Ihr Anteil kann etwa 0,1 bis 6, vorzugsweise 0,2 bis 2 Gew.-% betragen. Die Enzyme können an Träger-stoffen adsorbiert oder in Hüllsubstanzen eingebettet sein, um sie gegen vorzeitige Zersetzung zu schützen.

Zusätzlich zu mono- und polyfunktionellen Alkoholen und. Phosphonaten können die Mittel weitere **Enzymstabilisatoren** enthalten. Beispielsweise können 0,5 bis 1 Gew.-% Natriumformiat eingesetzt werden. Möglich ist auch der Einsatz von Proteasen, die mit löslichen Calciumsalzen und einem Calciumgehalt von vorzugsweise etwa 1,2 Gew.-%, bezogen auf das Enzym, stabilisiert sind. Besonders vorteilhaft ist jedoch der Einsatz von Borverbindungen, beispielsweise von Borsäure, Boroxid, Borax und anderen Alkalimetallboratenwie den Salzen der Orthoborsäure (H₃BO₃), der Metaborsäure (HBO₂) und der Pyroborsäure (Tetraborsäure H₂B₄O₇).

Beim Einsatz im maschinellen Waschverfahren kann es von Vorteil sein, den Mitteln übliche **Schauminhibitoren** zuzusetzen. Geeignete Schauminhibitoren enthalten beispielsweise bekannte Organoolysiloxane und/oder Paraffine oder Wachse. Weiterhin enthalten sein können **Schaumregulatoren,** wie beispielsweise Seife, Fettsäuren, insbesondere Kokosfettsäure und Palmkernfettsäure.

Als **Verdickungsmittel** können beispielsweise gehärtetes Rizinusöl, Salze von langkettigen Fettsäuren, die vorzugsweise in Mengen von 0 bis 5 Gew.-% und insbesondere in Mengen von 0,5 bis 2 Gew.%, beispielsweise Natrium-, Kalium-, Aluminium-, Magnesium- und Titan-Stearate oder die Natrium und/oder Kaliumsalze der Behensäure, sowie weitere polymere Verbindungen eingesetzt werden. Zu den letzten gehören bevorzugt Polyvinylpyrrolidon, Urethane und die Salze polymerer Polycarboxylate, beispielsweisehomopolymerer oder copolymerer Polyacrylate, Polymethacrylate und insbesondere Copolymere der Acrylsäure mit Maleinsäure, vorzugsweise solche aus 50 bis 10 Gew.-% Maleinsäure. Die relative Molekülmasse der Homopolymeren liegt im allgemeinen zwischen 1000 und 100000, die der Copolymeren zwischen 2000 und 200000, vorzugsweise zwischen 50000 bis 120000, bezogen auf die freie Säure. Insbesondere sind auch wasserlösliche Polyacrylate geeignet, die beispielsweise mit etwa 1% eines Polyallylethers der Sucrose quervernetzt sind und die eine relative Molekülmasse oberhalb 1000000 besitzen Beispiele hierfür sind unter dem Namen Carbopol^{®} 940 und 941 erhältliche Polymere. Die quervernetzten Polyacrylate werden vorzugsweise in Mengen nicht über 1 Gew.-% besonders bevorzugt in Mengen von 0,2 bis 0,7 Gew.-% eingesetzt.

In einer weiteren Ausführungsform werden die Hydroxymischether in Mitteln verwendet, insbesondere solche für automatische Geschirrspülmaschienen bevorzugt, die 0,1 bis 15, vorzugsweise 0,5 bis 12 Gew.% Tenside enthalten und die Hydroxymischether der Formel (I) enthalten, **insbesondere** solche mit einem Ethoxylierungsgrad x = 40 bis 60, verschlossen mit einem Epoxid mit insgesamt 12 Kohlenstoffatomen (R2=10), generiert aus einem nativen Fettalkohol mit 8 bis 10 Kohlenstoffatomen. Außerdem enthalten diese Mittel 5 bis 90, vorzugsweise 10 bis 80 Gew.% Builder, 0,1 bis 6 Gew.% Reinigungsmittelenzym, optional 0,1 bis 40, vorzugsweise 0,5 bis 30 Gew.% Bleichmittel und Hilfs- und Zusatzstoffe. Gew. % ist bezogen auf das Mittel zu verstehen.

**Ein weiteren Gegenstand** der vorliegenden Erfindung ist die Verwendung von Hydroxymischethern der Formel (I) in Wasch-, Spül- und Reinigungsmitteln, insbesondere zum Spülen und Reinigen von harten Oberflächen, vorzugsweise im Haushalt und den industriellen- und institutionellen Bereich. Besonders geeignet ist der Einsatz in Geschirr-Reinigern, Klarspülern, Badezimmerreiniger, Fußbodenreiniger, Reiniger nach dem clean shower Konzept (z.B. Badezimmerreiniger, der vor und nach dem Duschen auf Wände und Armaturen aufgesprüht wird, damit das Wasser und Seifenreste besser ablaufen, und dadurch ein Nachwischen entfällt), Cockpit-Reiniger (Auto, Flugzeug, Schiff, Motorrad), Fensterreiniger und Allzweckreiniger. Harte Oberflächen sind u. a. Keramikflächen, Metallflächen, lackierte Flächen, Kunststoffoberflächen und Oberflächen aus Glas, Stein, Beton, Porzellan und Holz.

Insbesondere bevorzugt ist die Verwendung der Hydroxymischether der Formel (I) zur Verbesserung des Netzverhaltens in Wasch-, Spül- und Reinigungsmitteln, vorzugsweise auf harten Oberflächen, insbesondere in maschinellen Geschirr-Reinigern und/oder Klarspülern.
Weiterhin bevorzugt ist die Verwendung von Hydroxymischethern der Formel (I) zur Verbesserung der Kunstoffverträglichkeit in Wasch-, Spül- und Reinigungsmitteln, insbesondere in maschinelle Geschirr-Reinigern und/oder Klarspülern.
Bevorzugt weiterhin ist die Verwendung von Hydroxymischethern der Formel (I) in Kombination mit Alkyl- und/oder Alkenyloligoglykosiden in den bisher aufgeführten Reinigungsbereichen.

Ganz besonders bevorzugt sind die Hydroxymischether der Formel (I), gegebenenfalls in Kombination mit den bereits beschriebenen weiteren Tensiden, zur vereinfachten Herstellung von festen Reinigerformulierungen. Die Hydroxymischethern können aufgrund ihrer höheren Schmelzpunkte einfacher in Wasch-, Spül- und Reinigungsmittel-Formulierungen, insbesondere in feste Reiniger eingearbeitet werden.

Weiterhin bevorzugt ist die Verwendung von Hydroxymischethern gemäß Formel (I), als Entschäumer in Wasch-, Spül- und Reinigungsmitteln, insbesondere in maschinellen Geschirr-Reiniger und/oder Klarspülern.

Die Hydroxymischethern zeichnen sich durch ihre **gute schaumdämpfende** Wirkung, der guten Netzwirkung, der hohen Verträglichkeit, insbesondere gegenüber Kunststoff und durch ihre höheren Schmelzpunkte aus.
Bisher zeigten Hydroxymischether mit höherem Alkoxylierungsgrad eine verbesserte Netzwirkung, jedoch eine Verschlechterung der Entschäumerwirkung. Bei den Hydroxymischethem tritt dieser Effekt nicht auf. Trotz hoher Netzwirung zeigen die Hydroxymischether eine sehr gutes Schaumverhalten.

Vorallem sind die Hydroxymischether durch die hohen Schmelzpunkte zur vereinfachten Herstellung von festen Formulierungen geeignet. Ebenso lösen sich diese Hydroxymischether, durch ihre höheren Schmelzpunkte, später in der Reinungsflotte auf und entfalten zeitversetzt, und in höherer Konzentration ihre Wirkung. Dieser Effekt kann besonders vorteilhaft in Klarspülanwendungen genutzt werden. Überraschenderweise bestechen die Hydroxymischether vorallem durch ihr farblose, klares Aussehen das eine Einarbeitung in eine Vielzahl von Wasch-, Spül- und Reinigungsmitteln, ohne aufwendigen Bleichvorgang erst möglich macht.

### Beispiel

### Screening - Methode zur Bewertung der Benetzungseigenschaften von Tensid - Lösungen gegenüber Kunststoffmaterialien

Die Benetzungseigenschaften von Tensidlösungen gegenüber Kunststoffen wurden in einem vereinfachten Screening in Anlehnung an die Bedingungen / Testparameter in einer handelsüblichen Geschirrspülmaschine, jedoch ohne die Verwendung einer solchen, bestimmt.

Zur Bewertung der Benetzungseigenschaften werden Kunststoff - Prüfkörper der Abmessung 20 x 5 cm zuerst mit 1%iger NaOH und dann mit iso - Propanol gereinigt. Die so vorbehandelten Prüfkörper werden dann in die zu prüfenden Lösung getaucht und direkt wieder entfernt. Die Bewertung erfolgt visuell durch Aufstellung einer Rangliste bzw. nach einer Notenscala von 1 - 5. Dabei bedeutet 5, daß spontanes Aufreißen des Flüssigkeitsfilms auftritt und die Benetzung vollständig aufgehoben wird. Note 5 wird bei Verwendung von Wasser erhalten. Die Note 1 bedeutet vollständige Benetzung der Kunststoffoberfläche bei einem gleichmäßigem Ablauf des Flüssigkeitsfilms. Note 1 wird bei Verwendung von Na-LAS (z.B. Maranil A 55 / COGNIS) erhalten.
Außerdem wurde bei Temperaturen von 20 °C und 60 °C die Zeit bestimmt, in der das völlige Ablaufen des Flüssigkeitsfilmes festzustellen ist. Diese Ergebnisse liegen in Tabelle 1 a vor.

### Testparameter:

| | |
|---|---|
| Wasserhärte: | 2°d |
| Salzfracht: | 700ppm |
| Temperatur: | 60°C |
| Tensidkonzentration: | 0,1 % |

### Prüfkörper:

PP (Polypropylen); PE (Polyethylen); PC (Polycarbonat);

In Tabelle 1 sind die Versuchsergebnisse dargestellt, wobei V1 bis V4 Vergleichsversuche und I, II und III die erfindungsgemäßen Beispiele wiedergeben.

**Tabelle 1:**

| **Benetzungseigenschaften an Kunststoffen** | | | | | | | |
|---|---|---|---|---|---|---|---|
| **Zusammensetzung in % Aktivsubstanz** | **V1** | **V2** | **V3** | **V4** | **V5** | **II** | **III** |
| Fettalkohol C8-C10 + 60EO - 2-hydroxydodecylether | - | - | - | - | - | - | 0,1 |
| Fettalkohol C8-C10 + 40EO - 2-hydroxydodecylether | - | - | - | - | - | 0,1 | - |
| Fettalkohol C8-C10 + 30EO - 2-hydroxydodecylether | - | - | - | - | 0,1 | - | - |
| Fettalkohol C8-C10 + 10EO - 2-hydroxydodecylether | - | - | - | 0,1 | - | - | - |
| Poly Tergent SLF-18B-45* | - | - | 0,1 | - | - | - | - |
| Maranil A 55 (Na - LAS) | - | 0,1 | - | - | - | - | - |
| Wasser, 2°d/700ppm NaCl | 100 | 99,9 | 99,9 | 99,9 | 99,9 | 99,9 | 99,9 |
| | | | | | | | |
| Benetzungseigenschaften an Kunststoffen | | | | | | | |
| | | | | | | | |
| Temperatur: 60°C / Kunststoff "PP" | 5 | 1 | 3 | 4 | 3 | 2 | 3 |
| Temperatur: 60°C / Kunststoff "PE" | 5 | 1 | 3 | 4 | 3 | 2 | 3 |
| Temperatur: 60°C / Kunststoff "PC" | 5 | 1 | 4 | 3 | 2 | 2 | 3 |

| | | | | | | | |
|---|---|---|---|---|---|---|---|
| *: Alkoholalkoxylat der Firma Olin Chemicals mit 1 PO und 22 EO, | | | | | | | |

**Tabelle 1a:**

| **Netzvermögen** | **20°C** | **60°C** |
|---|---|---|
| Poly Tergent SLF-18B-45* | 30s | > 100s |
| Fettalkohol C8-C10 + 40EO - 2-hydroxydodecylether | 30s | 30s |

| | | |
|---|---|---|
| *: Alkoholalkoxylat der Firma Olin Chemicals mit 1 PO und 22 EO, | | |

Bei den hochethoxylierten Hydroxymischethern bleibt das Netzvermögen trotz Temperaturerhöhung gleichbleibend gut.

Beim Spannungsriß-Korrosionstest werden die Kunststoffstäbchen kurz dem zu prüfendem Produkt durch Eintauchen oder Sprühen ausgesetzt. Das anhaftende Produkt wird nicht entfernt. Nach 24 Stunden wird erneut eingesprüht oder getaucht. Insgesamt werden die Kunststoffe 5 mal dem Prüfmedium ausgesetzt. Die abschließende Beurteilung erfolgt visuell nach 14 Tagen. Dabei bedeuten:
"1" - unverändert
"2" - Rißansatz / kleiner Riß
"3" - Riß durchgehend
"4" - Bruch
Die erfindungsgemäßen Beispiele sind in Tabelle 2 unter I und II dagestellt.

**Tabelle 2:**

| **Spannungsriß - Korrosionstest** | | | | | |
|---|---|---|---|---|---|
| **Zusammensetzung in % Aktivsubstanz** | **V1** | **V2** | **V3** | **I** | **II** |
| Fettalkohol C8-C10 + 60EO - 2-hydroxydodecylether | - | - | - | - | 5 |
| Fettalkohol C8-C10 + 40EO - 2-hydroxydodecylether | - | - | - | 5 | - |
| Fettalkohol C8-C10 + 10EO - 2-hydroxydodecylether | - | - | 5 | - | - |
| Poly Tergent SLF-18B-45* | - | 5 | - | - | - |
| Wasser, vollentsalzt | 100 | 95 | 95 | 95 | 95 |
| Spannungsriß - Korrosionstest an Kunststoffen Beurteilung nach 14 Tagen Terez 3010 (Acrylnitril-butadien-Styrol) Makrolon 3103 (Polycarbonat) | 1 | 4 | 4 | 3 | 2 |
| | 1 | 3 | 3 | 2 | 2 |

| | | | | | |
|---|---|---|---|---|---|
| *: Alkoholalkoxylat der Firma Olin Chemicals mit 1 PO und 22 EO, | | | | | |

Der Tabelle 3 sind die Schmelzpunkte der Hydroxymischether zu entnehmen.

**Tabelle 3:**

| **Schmelzpunkte/bereiche** | **°C** |
|---|---|
| Fettalkohol C8-C10 + 60EO - 2-hydroxydodecylether | 48 |
| Fettalkohol C8-C10 + 40EO - 2-hydroxydodecylether | 43 |
| Fettalkohol C8-C10 + 30EO - 2-hydroxydodecylether | 38-39 |
| Fettalkohol C8-C10 + 10EO - 2-hydroxydodecylether | bei Raumtemperatur flüssig mit Trübungen |
| Poly Tergent SLF-18B-45* | 27-32 |

| | |
|---|---|
| *: Alkoholalkoxylat der Firma Olin Chemicals mit 1 PO und 22 EO, | |

In der Tabelle 4 wird das Schaumverhalten der Tenside beschrieben.
Zur Bestimmung des Schaumverhaltens der Tensidmischungen wurden 2 Eier (ca. 100 bis 110 g) in einem elektrischen Mixgerät im Verhältnis 1 : 1 mit Wasser mit einem Härtegrad von 16 d verdünnt und 2 min verrührt. 100g der resultierenden Emulsion wurden dann in einem doppelwandigen Meßzylinder mit einem Fassungsvermögen von 2000 ml auf 500 ml mit Wassser von 16 d aufgefüllt und auf 50 C temperiert. Mit Hilfe einer Labor-Schlauchpumpe wurde die Lösung mit einem Glasrohr vom Boden des Meßzylinders angesaugt. Die Rückführung erfolgte über ein zweites Rohr, dessen unteres Ende in der Höhe der 2000 ml-Markierung des Meßzylinders endete. Die Flüssigkeit wurde mit einer Geschwindigkeit von 4 ml/min umgepumpt. Durch dieses Umpumpen wird Schaum erzeugt. Die Lösung wurde nun solange umgepumpt, bis sich ein Schaumvolumen von 2000 ml eingestellt hatte. Nach Erreichen der 2000 ml-Marke wurden dieser Mischung 0,1 g des erfindungsgemäßen Hydroxymischethers (Beispiel III) sowie (in einem 2. Versuch) zum Vergleich 0,1 g des eines marktüblichen Standards für Klarspüler (Beispiel V 4) zugesetzt. Nach 0,5, 1, 2, 3, 5, 10, 20 und 30 min wurde das Volumen aus dem entstandenen Schaum und der Flüssigkeit abgelesen. Die Ergebnisse sind in der Tabelle 4 zusammengefaßt:

| **Zusammensetzung in % Aktivsubstanz** | **V4** | **III** |
|---|---|---|
| | | |
| Fettalkohol C8-C10 + 40EO - 2-hydroxydodecylether | - | 0,1 |
| | | - |
| Fettalkohol C12/14 + 5EO - 4PO (bedeutendster marktüblichen Standard für Klarspüler) | 0,1 | - |

**Tabelle 4:**

| **Schaumvolumen** | **V4 ml** | **III ml** |
|---|---|---|
| Vor Zugabe der Tenside | 2000 | 2000 |
| 0,5 Minuten | 1900 | 1700 |
| 1 Minute | 1900 | 1280 |
| 2 Minuten | 1400 | 880 |
| 3 Minuten | 1200 | 880 |
| 5 Minuten | 900 | 800 |
| 10 Minuten | 950 | 860 |
| 20 Minuten | 1000 | 980 |
| 30 Minuten | 1100 | 1000 |

## Patentansprüche

1. Verwendung von Hydroxymischethern gemäß Formel (I)
**R¹O[CH₂CH₂O]ₓCH₂CH(OH)R²** **(I)**
in der R¹ für einen linearen oder verzweigten Alkyl- und/oder Alkenylrest mit 4 bis 22 Kohlenstoffatomen, R² für einen linearen oder verzweigten Alkyl- und/oder Alkenylrest mit 2 bis 22 Kohlenstoffatomeny, x für 40 bis 80 steht, als Entschäumer in Wasch-, Spül- und Reinigungsmitteln, insbesondere in maschinellen Geschirr-Reinigern und/oder Klarspülern.

2. Verwendung von Hydroxymischethern nach Anspruch 1, wobei in der Formel (I) x für eine Zahl von 40 bis 60 steht.

3. Verwendung nach den Ansprüchen 1 bis 2, **dadurch gekennzeichnet, dass** Hydroxymischether der Formel (I) verwendet werden, in denen R¹ für einen Alkylrest mit 8-12 Kohlenstoffatomen und R² für einen Alkylrest mit 8 bis 12 Kohlenstoffatomen steht.

4. Verwendung nach den Ansprüchen 1 bis 3, **dadurch gekennzeichnet, dass** neben den Hydroxymischethern der Formel (I) Alkyl- und/oder Alkenyloligoglycoside der Formel (II) mit verwendet werden.
**R⁵O-[G]ₚ** **(II)**
wobei R⁵ für einen Alkyl- und/oder Alkenylrest mit 4 bis 22 Kohlenstoffatomen, G für einen Zuckerrest mit 5 oder 6 Kohlenstoffatomen und p für Zahlen von 1 bis 10 steht.

5. Verwendung nach Anspruch 4, **dadurch gekennzeichnet, dass** solche Alkyl- und/oder Alkenyloligoglycoside der Formel (II) verwendet werden, in der p für Zahlen von 1 bis 3 und R⁵ einen Alkylrest mit 6 bis 16 Kohlenstoffatomen steht.

6. Verwendung nach den Ansprüchen 1 bis 5, **dadurch gekennzeichnet, dass** die Hydroxymischether der Formel (I) in Mengen von 0,01 bis 25 Gew.-% - berechnet als Aktivsubstanz, bezogen auf die Wasch-, Spül- und Reinigungsmittel - verwendet werden.

7. Verwendung nach den Ansprüchen 4 bis 6, **dadurch gekennzeichnet, dass** - berechnet als Aktivsubstanz, bezogen auf die Wasch-, Spül- und Reinigungsmittel - 0,01 bis 30 Gew.-% Alkyl- und/oder Alkenyloligoglycoside der Formel (II) verwendet werden.

8. Verwendung nach den Ansprüchen 1 bis 7, **dadurch gekennzeichnet, dass** weitere nicht ionische Tenside verwendet werden, vorzugsweise ausgewählt aus der Gruppe, die gebildet wird von Alkoxylaten von Alkanolen, endgruppenverschlossenen Alkoxylaten von Alkanolen ohne freie OH-Gruppen, alkoxylierten Fettsäureniedrigalkylestern und Aminoxiden.

9. Verwendung nach den Ansprüchen 1 bis 8, **dadurch gekennzeichnet, dass** weitere nicht ionische Tenside - berechnet als Aktivsubstanz, bezogen auf die Wasch-, Spül- und Reinigungsmittel - in Mengen von 0,1 bis 15 Gew.-% mit verwendet werden.

10. Verwendung nach einem der Ansprüche 1 bis 9, **dadurch gekennzeichnet, dass** als weitere Komponenten anionische Tenside mit verwendet werden, vorzugsweise ausgewählt aus der Gruppe, die gebildet wird von Alkyl- und/oder Alkenylsulfaten, Alkylethersulfaten, Alkylbenzolsulfonaten, Monoglycerid(Ether)sulfaten und Alkansulfonaten.

11. Verwendung nach den Ansprüchen 1 bis 10, **dadurch gekennzeichnet, dass** - berechnet als Aktivsubstanz, bezogen auf Wasch-, Spül- und Reinigungsmittel, 0,1 bis 20 Gew.-% anionische Tenside verwendet werden.

## Claims

1. Use of hydroxy mixed ethers according to formula (I)
**R¹O[CH₂CH₂O]ₓCH₂CH(OH)R²** **(I)**
in which R¹ is a linear or branched alkyl and/or alkenyl radical having 4 to 22 carbon atoms, R² is a linear or branched alkyl and/or alkenyl radical having 2 to 22 carbon atoms, x is 40 to 80, as anti-foaming agents in laundry detergents, washing-up detergents and cleaners, in particular in machine dishwashing detergents and/or rinse aids.

2. Use of hydroxy mixed ethers according to Claim 1, where, in the formula (I), x is a number from 40 to 60.

3. Use according to Claims 1 to 2, **characterized in that** hydroxy mixed ethers of the formula (I) are used, in which R¹ is an alkyl radical having 8-12 carbon atoms and R² is an alkyl radical having 8 to 12 carbon atoms.

4. Use according to Claims 1 to 3, **characterized in that**, as well as the hydroxy mixed ethers of the formula (I), alkyl and/or alkenyl oligoglycosides of the formula (II) are co-used
**R⁵O-[G]ₚ** **(II)**
where R⁵ is an alkyl and/or alkenyl radical having 4 to 22 carbon atoms, G is a sugar radical having 5 or 6 carbon atoms and p is numbers from 1 to 10.

5. Use according to Claim 4, **characterized in that** those alkyl and/or alkenyl oligoglycosides of the formula (II) are used in which p is numbers from 1 to 3 and R⁵ is an alkyl radical having 6 to 16 carbon atoms.

6. Use according to Claims 1 to 5, **characterized in that** the hydroxy mixed ethers of the formula (I) are used in amounts of from 0.01 to 25% by weight - calculated as active substance, based on the laundry detergents, dishwashing detergents and cleaners.

7. Use according to Claims 4 to 6, **characterized in that** - calculated as active substance, based on the laundry detergents, dishwashing detergents and cleaners - 0.01 to 30% by weight of alkyl and/or alkenyl oligoglycosides of the formula (II) are used.

8. Use according to Claims 1 to 7, **characterized in that** further nonionic surfactants are used, preferably selected from the group which is formed by alkoxylates of alkanols, terminally capped alkoxylates of alkanols without free OH groups, alkoxylated fatty acid lower alkyl esters and amine oxides.

9. Use according to Claims 1 to 8, **characterized in that** further nonionic surfactants - calculated as active substance, based on the laundry detergents, dishwashing detergents and cleaners - are used in amounts of from 0.1 to 15% by weight.

10. Use according to one of Claims 1 to 9, **characterized in that** anionic surfactants are co-used as further components, preferably selected from the group which is formed by alkyl and/or alkenyl sulphates, alkyl ether sulphates, alkylbenzenesulphonates, monoglyceride (ether) sulphates and alkanesulphonates.

11. Use according to Claims 1 to 10, **characterized in that** - calculated as active substance, based on laundry detergents, dishwashing detergents and cleaners, 0.1 to 20% by weight of anionic surfactants are used.

## Revendications

1. Utilisation d'hydroxyéthers mixtes selon la formule (I)
R¹O[CH₂CH₂O]ₓCH₂CH(OH)R² (I)
où
R¹ représente un radical alkyle et/ou alcényle linéaire ou ramifié comprenant 4 à 22 atomes de carbone,
R² représente un radical alkyle et/ou alcényle linéaire ou ramifié comprenant 2 à 22 atomes de carbone,
x vaut 40 à 80, comme antimousse dans les agents de lavage, de rinçage et de nettoyage, en particulier dans des agents de nettoyage et/ou de rinçage pour lave-vaisselle.

2. Utilisation d'hydroxyéthers mixtes selon la revendication 1, où, dans la formule (I), x vaut 40 à 60.

3. Utilisation selon les revendications 1 à 2, **caractérisée en ce qu'**on utilise des hydroxyéthers mixtes de formule (I), dans laquelle
R¹ représente un radical alkyle comprenant 8 à 12 atomes de carbone et
R² représente un radical alkyle comprenant 8 à 12 atomes de carbone.

4. Utilisation selon les revendications 1 à 3, **caractérisée en ce qu'**on utilise conjointement, outre les hydroxyéthers mixtes de formule (I), des alkyloligoglycosides et/ou des alcényloligoglycosides de formule (II),
R⁵O-[G]ₚ (II)
où
R⁵ représente un radical alkyle et/ou alcényle comprenant 4 à 22 atomes de carbone,
G représente un radical de sucre comprenant 5 ou 6 atomes de carbone et
p représente des nombres de 1 à 10.

5. Utilisation selon la revendication 4, **caractérisée en ce qu'**on utilise des alkyloligoglycosides et/ou des alcényloligoglycosides de formule (II), dans laquelle p représente des nombres de 1 à 3 et R⁵ représente un radical alkyle comprenant 6 à 16 atomes de carbone.

6. Utilisation selon les revendications 1 à 5, **caractérisée en ce que** les hydroxyéthers mixtes de formule (I) sont utilisés en des quantités de 0,01 à 25% en poids - calculé comme substance active, par rapport à l'agent de lavage, de rinçage et de nettoyage.

7. Utilisation selon les revendications 4 à 6, **caractérisée en ce qu'**on utilise - calculé comme substance active, par rapport à l'agent de lavage, de rinçage et de nettoyage - 0,01 à 30% en poids d'alkyloligoglycosides et/ou d'alcényloligoglycosides de formule (II).

8. Utilisation selon les revendications 1 à 7, **caractérisée en ce qu'**on utilise d'autres agents tensioactifs non ioniques, de préférence choisis dans le groupe formé par les alcoxylates d'alcanols, les alcoxylates à groupes terminaux fermés d'alcanols sans groupes OH libres, les esters alkyliques inférieurs d'acides gras alcoxylés et les oxydes d'amine.

9. Utilisation selon les revendications 1 à 8, **caractérisée en ce que** d'autres agents tensioactifs non ioniques - calculé comme substance active, par rapport à l'agent de lavage, de rinçage et de nettoyage - sont utilisés conjointement en des quantités de 0,1 à 15% en poids.

10. Utilisation selon l'une quelconque des revendications 1 à 9, **caractérisée en ce qu'**on utilise conjointement, comme autres composants, des agents tensioactifs anioniques, de préférence choisis dans le groupe formé par les alkylsulfates et/ou les alcénylsulfates, les alkyléthersulfates, les alkylbenzènesulfonates, les (éther)sulfates de monoglycéride et les alcanesulfonates.

11. Utilisation selon les revendications 1 à 10, **caractérisée en ce qu'**on utilise - calculé comme substance active, par rapport à l'agent de lavage, de rinçage et de nettoyage - 0,1 à 20% en poids d'agents tensioactifs anioniques.
